# EUROPÄISCHE PATENTSCHRIFT

(11) **EP 2 570 325 B1**
(45) Veröffentlichungstag und Bekanntmachung des Hinweises auf die Patenterteilung: **22.01.2014**
(21) Anmeldenummer: 12006432.4
(22) Anmeldetag: 13.09.2012
(51) Int. Cl.: B62B 9/10

(54) **Kinderwagen, insbesondere Rehakinderwagen**
Pushchair, in particular rehab pushchair
Poussette, en particulier poussette thérapeutique

(30) Priorität: 14.09.2011 DE 102011116098
(43) Veröffentlichungstag der Anmeldung: 20.03.2013
(73) Patentinhaber: Otto Bock Mobility Solutions GmbH, 07426 Königsee (DE)
(72) Erfinder: Spielmann, Christian, 99310 Arnstadt (DE); Sonderhüsken, Jürgen, 59071 Hamm (DE)
(74) Vertreter: Rehmann, Thorsten

(56) Entgegenhaltungen:
- DE-A1- 3 532 762
- GB-A- 107 032
- US-A- 6 086 086
- US-A1- 2008 224 430

## Beschreibung

Die Erfindung betrifft einen Kinderwagen mit folgenden Merkmalen:
a) einem faltbaren Untergestell,
b) einer fahrgestellfesten Sitzaufnahme zur Aufnahme eines Sitzes mit einer Rückenlehne,
c) der Sitz ist alternativ in Fahrtrichtung F oder entgegen die Fahrtrichtung F in der Sitzaufnahme befestigbar,
d) die Sitzaufnahme ist
   d₁) zur Einstellung der Neigung des Sitzes gegenüber der Horizontalen H verschwenkbar am Untergestell angeordnet,
   d₂) in ihrer jeweiligen Lage gegenüber dem Untergestell arretierbar,
e) die Verschwenkung der Sitzaufnahme erfolgt unter Beteiligung einer Verschwenkeinrichtung,
f) die Verschwenkeinrichtung umfasst ein Bedienelement, ein Arretierelement und einen mit dem Bedienelement und dem Arretierelement in Wirkverbindung stehenden Aktivator,
g) das Arretierelement ist am Untergestell angeordnet,
h) der Aktivator ist in die Sitzaufnahme integriert.

Ein solcher Kinderwagen ist beispielsweise aus der DE 35 32 762 A1 bekannt. Ein ähnlicher Kinderwagen wird von der Fa. Otto Bock als Reha-Kinderwagen unter der Bezeichnung "Kimba Spring" vertrieben.

Die US 2008/0224430 A1 offenbart einen Kinderwagen für Kleinstkinder, bei dem ein wannenförmiger Aufsatz in ein Untergestell eingesetzt werden kann.

Der Neigungswinkel des Aufsatzes, den dieser im Untergestell einnimmt, ist einstellbar.

Die US 6,086,086 offenbart einen Reha-Kinderwagen mit einem einstellbaren Sitzgestell für behinderte Kinder. Das Untergestell, auf dem das Sitzgestell aufsetzbar ist, ist faltbar.

An im Rehabereich eingesetzte Kinderwagen werden eine Reihe von Anforderungen gestellt, um eine optimale Abstimmung auf das behinderte Kind ermöglichen zu können. Während der Altersbereich der Kinder, die allgemein in einem Kinderwagen gefahren werden, auf wenige Jahre beschränkt ist, liegt der Altersbereich behinderter Kinder, die denselben Rollstuhl benutzen, zwischen 1 und etwa 12 Jahren. Der aus der Sitzfläche und der Rückenlehne bestehende Sitz lässt sich genau an die individuellen Körperproportionen des behinderten Kindes anpassen und sorgt somit für bestmögliche Unterstützung. Vielfach können Sitztiefe, Sitzbreite, Rücken- und Fußbankhöhe stufenlos eingestellt werden. Verstellbare Becken- und seitliche Begrenzungspelotten ermöglichen eine optimale Position. Damit während der Fahrt jederzeit Augenkontakt mit dem Kind gehalten werden kann, lässt sich der Sitz vom Untergestell abnehmen und entgegen der Fahrtrichtung wieder auf das Untergestell aufsetzen. Die Neigung des Sitzes (Kantelung) lässt sich von einer aktiven Sitzhaltung bis hin zur Entlastungsposition, in der das Kind liegt, einstellen. Damit der Kinderwagen einfach in einem Kraftfahrzeug transportiert werden kann, lässt er sich zusammenklappen oder zusammenfalten. Um den Sitz vom Untergestell lösen zu können, ist eine Sitzaufnahme vorgesehen, in die der Sitz mittels einer Kupplung eingeklinkt und darin verrastet werden kann.

Um den Sitz in seiner Neigung verstellen zu können, ist die Sitzaufnahme am Untergestell schwenkbar befestigt. Über eine am Schiebebügel des Untergestells befestigte Auslöseeinrichtung kann die Arretierung des Sitzes gelöst und der Sitz im Winkel verstellt werden. Nachteilig dabei ist, dass die Bedienperson mit einer Hand die Entriegelung vornehmen und gleichzeitig mit der anderen Hand den Sitz festhalten muss, damit er - insbesondere, wenn das Kind sich im Sitz befindet - nicht unkontrolliert verschwenkt. Die Handhabung ist folglich umständlich und muss insbesondere bei größeren und damit schwereren Kindern unter Umständen von zwei Personen vorgenommen werden.

Von dieser Problemstellung ausgehend soll die Einstellung der Neigung des Sitzes gegenüber der Horizontalen vereinfacht werden.

Zur Problemlösung zeichnet sich der eingangs beschriebene Kinderwagen dadurch aus, dass das Bedienelement an der Rückenlehne angeordnet ist.

Dadurch, dass das Bedienelement unmittelbar mit dem Sitz in Verbindung steht, kann die Bedienperson mit derselben Hand, mit der sie das Arretierelement löst, auch den Sitz abstützen und die Einstellung der Sitzneigung dann einhändig vornehmen und die Arretierung des Sitzes wieder einleiten, ohne die Abstützkraft unterbrechen zu müssen.

Vorzugsweise ist der Aktivator ein gegen die Kraft einer Feder schwenkbar am Fahrgestell angeordneter Hebel, dessen Schwenkbewegung insbesondere vorzugsweise über das Bedienelement einleitbar ist.

Wenn das Bedienelement ein Drehknopf ist, wird die Handhabung weiter vereinfacht. Der Drehknopf kann dann über einen ersten Seilzug mit dem Hebel in Verbindung stehen und der Aktivator dann insbesondere vorzugsweise über einen zweiten Seilzug mit dem Arretierelement verbunden sein.

Eine konstruktiv besonders einfache Ausgestaltung ist möglich, wenn an dem dem Bedienelement abgewandten Ende des ersten Seilzugs unter der Sitzfläche im Sitz ein Kulissenstein gleitend geführt ist, der am Hebel anliegt.

Vorzugsweise ist der Hebel im Wesentlichen T-förmig ausgebildet, sodass er einen parallel zur Fahrtrichtung weisenden Schenkel und zwei quer zur Fahrtrichtung weisende Schenkel ausbildet und der Kulissenstein in Abhängigkeit von der Einbaurichtung des Sitzes (in Fahrtrichtung oder entgegen die Fahrtrichtung) an einem der quer zur Fahrtrichtung weisenden Schenkel anliegt.

Das Arretierelement ist vorzugsweise eine nach dem Schlingprinzip arbeitende Teleskopiereinrichtung, wie sie beispielsweise aus der EP 0 628 448 B1 bekannt ist, oder als Teleskopzylinder vertrieben wird.

Mit Hilfe einer Zeichnung soll ein Ausführungsbeispiel der Erfindung nachfolgend näher beschrieben werden. Es zeigen:

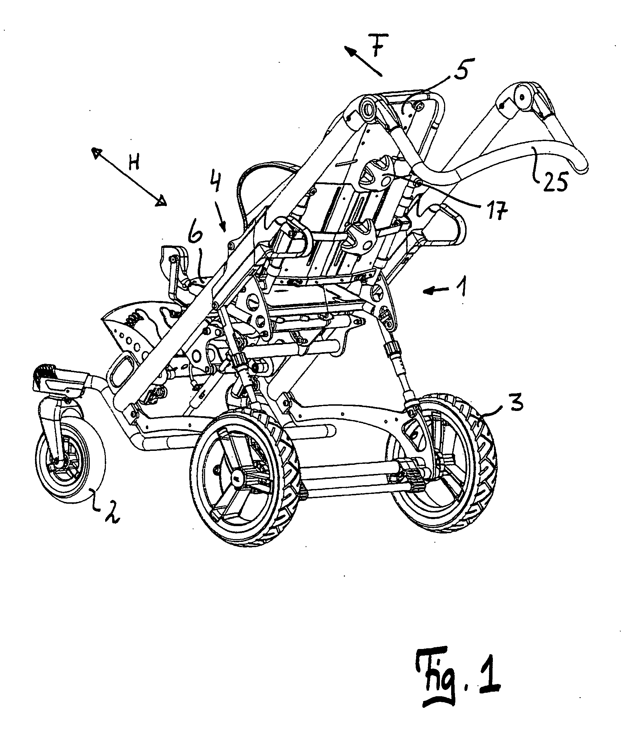

- Figur 1 -: die perspektivische Darstellung eines Kinderwagens;

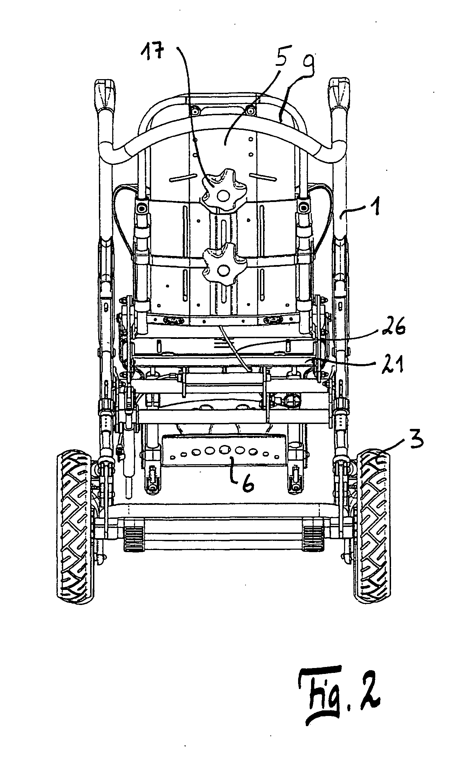

- Figur 2 -: die Rückansicht des Kinderwagens nach Figur 1;

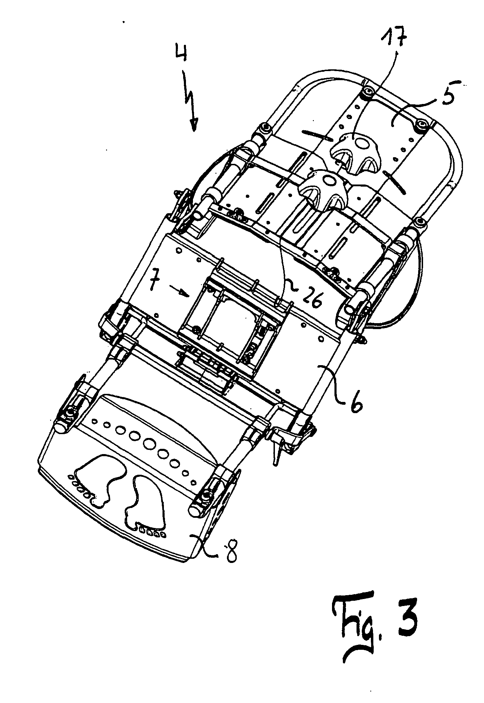

- Figur 3 -: die perspektivische Darstellung auf den Sitz von unten;

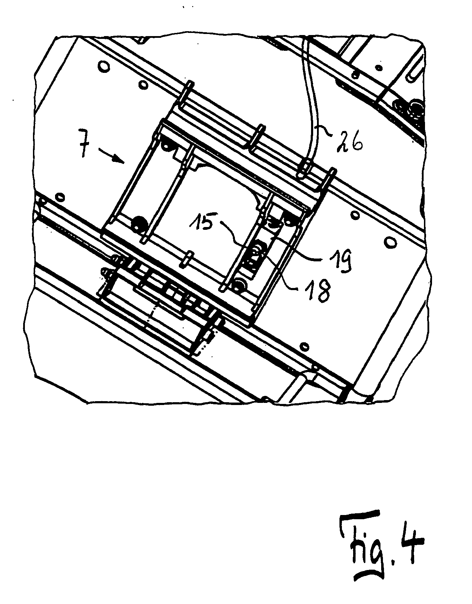

- Figur 4 -: einen Ausschnitt aus Figur 3;
- Figur 5 -: die teilweise aufgebrochene Unteransicht des Kinderwagens;
- Figur 6 -: eine andere Darstellung gemäß Figur 5;
- Figur 7 -: die Draufsicht auf das Untergestell ohne Sitz.

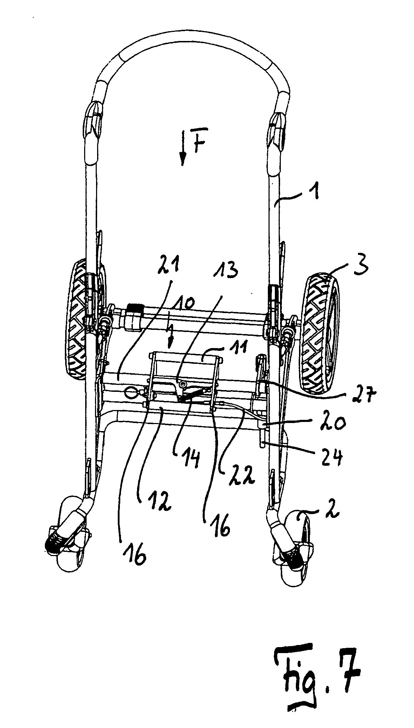

Der Rollstuhl besteht im Wesentlichen aus dem Untergestell 1, an dem die vorderen und hinteren Räder 2, 3 befestigt sind. Im Untergestell 1 ist der aus der Rückenlehne 9 und der Sitzfläche 6 bestehende Sitz 4 lösbar eingesetzt. Die Rückenlehne 9 ist mit einer Strebe 5 verstärkt. An der Sitzfläche 6 höhenverstellbar befestigt ist die Fußauflage 8. Unter der Sitzfläche 6 ist am Sitz 4 die Kupplung 7 befestigt, mit der der Sitz 4 in die am Untergestell 1 schwenkbar befestigte Sitzaufnahme 10 eingesetzt werden kann. Die Sitzaufnahme 10 ist fest auf dem verdrehbar im Untergestell 1 gelagerten Querrohr 21 befestigt und besteht aus den zueinander quer verlaufenden Stangen 11, 12 und die beiden diese verbindenden Dreieckslenker 16. In der Sitzaufnahme 10 ist der T-förmige Hebel 13 schwenkbar gelagert, der einen zur Fahrtrichtung F parallelen Schenkel 13a und zwei hierzu quer verlaufende Schenkel 13b, 13c ausbildet. Der Hebel 13 ist im Uhrzeigersinn (Figur 7) gegen die Kraft der Zugfeder 14 verschwenkbar. Die beiden Enden der Schenkel 13b, 13c sind in den mit den Enden der Stangen 11, 12 verschraubten Dreieckslenkern 16 geführt.

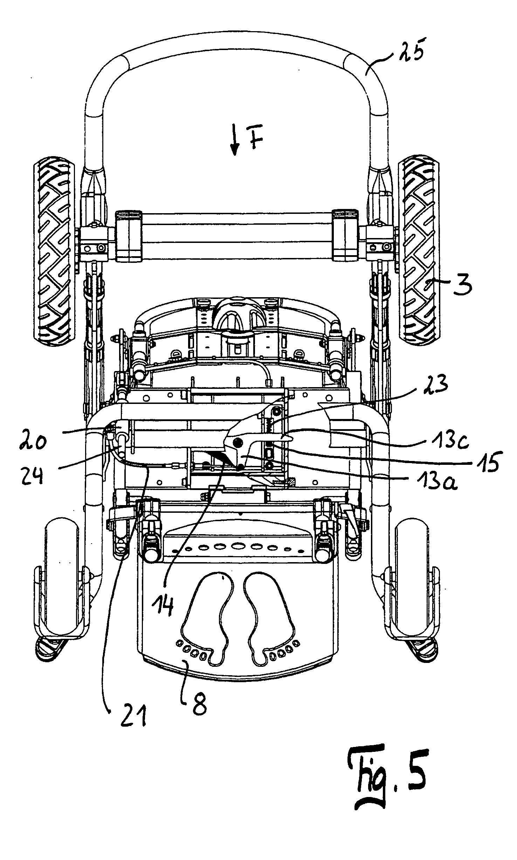

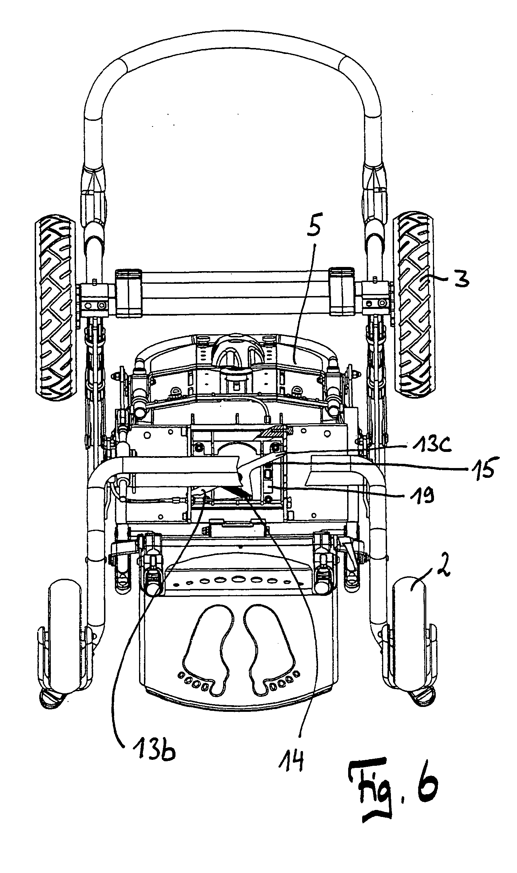

In der Kupplung 7 ist in einer Kulisse 19 der Kulissenstein 18 geführt, der einen von der Unterseite des Sitzes 4 wegragenden Bolzen 15 aufweist. In Abhängigkeit davon, ob der Sitz 4 in Fahrtrichtung F oder entgegen der Fahrtrichtung F in die Sitzaufnahme 7 eingesetzt ist, liegt der Bolzen 15 am Schenkel 13b oder am Schenkel 13c an. Über den ersten Seilzug 26 ist der Kulissenstein 15 mit dem Drehknopf 17 verbunden. Beim Verdrehen des Drehknopfes 17 verkürzt sich die Wirklänge des zweiten Seilzuges 22 und der Kulissenstein 18 wird gegen die Kraft der Feder 23 verschoben, wodurch mittels des am Schenkel 13c anliegenden Bolzens 15 (vgl. Figur 5) der Hebel 13 verschwenkt wird, wobei die Zugfeder 14 gespannt wird (vgl. Figur 6). Am Schenkel 13a des Hebels 13 ist der Seilzug 22 befestigt, der sich an einem der Dreieckslenker 16 abstützt. Mit seinem anderen Ende ist der Seilzug 22 mit dem hier nicht dargestellten Auslösehebel des Arretierelements 20 verbunden, bei dem es sich um einen nach dem Schlingprinzip wirkenden Teleskopzylinder handelt, wie er beispielsweise in der EP 0 628 448 B1 beschrieben ist. Wird das nicht gezeigte Auslöseelement betätigt kann der Teleskopzylinder ausgefahren werden. Hierzu ist die Kolbenstange 24 an ihrem einen Ende mit einem Hebel 27 verbunden, der auf der drehbar im Untergestell 1 gelagerten Querstange 21 befestigt ist. Wird der in die Sitzaufnahme 10 eingesetzte Sitz verschwenkt, dreht sich die Querstange 21 und die Kolbenstange 24 wird in den Zylinder 20 eingeschoben oder herausgezogen.

Wird der Drehknopf 17 nach Einstellung der gewünschten Sitzneigung losgelassen, schiebt die Druckfeder 23 den Bolzen 15 und damit den Kulissenstein 18 in seine Ausgangsstellung zurück, wodurch der Hebel 13 über die Zugfeder 14 ebenfalls in seine Ausgangslage zurückgedreht wird, sodass das nicht gezeigte Auslöseelement am Teleskopzylinder 20 ebenfalls in seine Ursprungslage zurückfedert und eine weitere Linearbewegung der Kolbenstange 24 verhindert wird, wodurch der Sitz in seiner Neigung arretiert ist.

Die Schenkel 13b, 13c des Hebels 13 sind so ausgestaltet, dass der Kulissenstein 18 bzw. der mit diesem verbundene Bolzen 15 in Abhängigkeit der Richtung, in die der Sitz 4 in die Sitzaufnahme 10 eingesetzt ist, anliegt und beim Verdrehen des Drehknopfes 17 der Hebel 13 immer im Uhrzeigersinn (bezogen auf die Draufsicht auf den Kinderwagen) verdreht wird. Die Figuren 5 und 6 zeigen den Hebel 13 aus der Unteransicht auf den Kinderwagen, sodass sich der Hebel 13, wenn das Drehelement 17 verdreht wird, entgegen dem Uhrzeigersinn dreht. Figur 5 zeigt die arretierte Stellung des Sitzes und Figur 6 die Stellung, in der das Arretierelement 20 gelöst ist, sodass ein manuelles Verschwenken des Sitzes 4 möglich ist.

Die Neigung der Rückenlehne 9 gegenüber der Sitzfläche 6 ist ebenfalls einstellbar. Am Untergestell 1 schwenkbar angeordnet ist der Schiebebügel 25, der in seiner Höhe an die Anatomie der den Rollstuhl schiebenden Person angepasst werden kann.

**Bezugszeichenliste**

| | | | |
|---|---|---|---|
| 1 | Untergestell | 25 | Schiebebügel |
| 2 | Vorderrad 35 | 26 | Seilzug |
| 3 | Hinterrad | 27 | Hebel |
| 4 | Sitz | F | Fahrtrichtung |
| 5 | Strebe | H | Horizontale |
| 6 | Sitzfläche | | |
| 7 | Kupplung 40 | Re/rog-bro | |
| 8 | Fußauflage | | |
| 9 | Rückenlehne | | |
| 10 | Sitzaufnahme | | |
| 11 | Stange | | |
| 12 | Stange | | |
| 13 | Hebel | | |
| 13a | Schenkel | | |
| 13b | Schenkel | | |
| 13c | Schenkel | | |
| 14 | Feder/Zugfeder | | |
| 15 | Bolzen | | |
| 16 | Dreieckslenker | | |
| 17 | Drehknopf/ Betätigungseinrichtung | | |
| 18 | Kulissenstein | | |
| 19 | Kulisse | | |
| 20 | Teleskopzylinder/ Teleskopiereinrichtung | | |
| 21 | Querrohr | | |
| 22 | Bowdenzug/Seilzug | | |
| 23 | Feder | | |
| 24 | Kolbenstange | | |

## Patentansprüche

1. Kinderwagen mit:
a) einem faltbaren Untergestell (1),
b) einer fahrgestellfesten Sitzaufnahme (10) zur Aufnahme eines Sitzes (4) mit einer Rückenlehne (9),
c) der Sitz (4) ist alternativ in Fahrtrichtung (F) oder entgegen die Fahrtrichtung (F) in der Sitzaufnahme (10) befestigbar,
d) die Sitzaufnahme (10) ist
d₁) zur Einstellung der Neigung des Sitzes (4) gegenüber der Horizontalen (H) verschwenkbar am Untergestell (1) angeordnet,
d₂) in ihrer jeweiligen Lage gegenüber dem Untergestell (1) arretierbar,
e) die Verschwenkung der Sitzaufnahme (10) erfolgt unter Beteiligung einer Verschwenkeinrichtung,
f) die Verschwenkeinrichtung umfasst ein Bedienelement (17), ein Arretierelement (20, 24) und einen mit dem Bedienelement (17) und dem Arretierelement (20, 24) in Wirkverbindung stehenden Aktivator (13),
g) das Arretierelement (20, 24) ist am Untergestell (1) angeordnet,
h) der Aktivator (13) ist in die Sitzaufnahme (10) integriert,
**gekennzeichnet durch** folgendes Merkmal:
i) das Bedienelement (17) ist an der Rückenlehne (9) angeordnet.

2. Kinderwagen nach Anspruch 1, **dadurch gekennzeichnet, dass** der Aktivator (13) ein gegen die Kraft einer Feder (14) schwenkbar am Fahrgestell (1) angeordneter Hebel (13) ist.

3. Kinderwagen nach Anspruch 2, **dadurch gekennzeichnet, dass** die Schwenkbewegung des Hebels (13) über das Bedienelement (17) einleitbar ist.

4. Kinderwagen nach Anspruch 1, **dadurch gekennzeichnet, dass** das Bedienelement (17) ein Drehknopf ist.

5. Kinderwagen nach Anspruch 4, **dadurch gekennzeichnet, dass** der Drehknopf (17) über einen ersten Seilzug (26) mit dem Hebel (13) in Verbindung steht.

6. Kinderwagen nach Anspruch 1 oder 2, **dadurch gekennzeichnet, dass** der Aktivator (13) über einen zweiten Seilzug (22) mit dem Arretierelement (20, 24) in Verbindung steht.

7. Kinderwagen nach Anspruch 3 und 6, **dadurch gekennzeichnet, dass** am dem Bedienelement (17) abgewandten Ende des ersten Seilzugs (26) unter der Sitzfläche (6) im Sitz (4) ein Kulissenstein (18) gleitend geführt ist, der am Hebel (13) anliegt.

8. Kinderwagen nach Anspruch 7, **dadurch gekennzeichnet, dass** der Hebel (13) im Wesentlichen T-förmig mit zwei quer zur Fahrtrichtung(F)weisenden Schenkeln ausgebildet ist und der Kulissenstein (18) in Abhängigkeit von der Einbaurichtung des Sitzes (4) an einem der Schenkel (13b, 13c) anliegt.

9. Kinderwagen nach Anspruch 1, **dadurch gekennzeichnet, dass** das Arretierelement (20, 24) eine nach dem Schlingfederprinzip arbeitende Teleskopiereinrichtung ist.

10. Kinderwagen nach Anspruch 1, **dadurch gekennzeichnet, dass** er ein Reha-Kinderwagen ist.

## Claims

1. Stroller having:
a) a foldable underframe (1),
b) a seat receiving means (10) which is fixed to the underframe for receiving a seat (4) with a backrest (9),
c) the seat (4) is able to be fastened in the seat receiving means (10) alternatively facing in the direction of travel (F) or facing against the direction of travel (F),
d) the seat receiving means (10) is
d₁) arranged on the underframe (1) so as to be pivotable in relation to the horizontal (H) for adjusting the inclination of the seat (4),
d₂) lockable in its respective position in relation to the underframe (1),
e) the pivoting of the seat receiving means (10) is effected by means of a pivoting device,
f) the pivoting device includes a control element (17), a locking element (20, 24) and an actuator (13) which is in operative connection with the control element (17) and the locking element (20, 24),
g) the locking element (20, 24) is arranged on the underframe (1),
h) the actuator (13) is incorporated into the seat receiving means (10),
**characterized by** the following feature:
i) the control element (17) is arranged on the backrest (9).

2. Stroller according to Claim 1, **characterized in that** the actuator (13) is a lever (13) which is arranged on the underframe (1) so as to be pivotable against the force of a spring (14).

3. Stroller according to Claim 2, **characterized in that** the pivoting movement of the lever (13) is introducible by means of the control element (17).

4. Stroller according to Claim 1, **characterized in that** the control element (17) is a rotary knob.

5. Stroller according to Claim 4, **characterized in that** the rotary knob (17) is connected to the lever (13) by means of a first cable pull (26).

6. Stroller according to Claim 1 or 2, **characterized in that** the actuator (13) is connected to the locking element (20, 24) by means of a second cable pull (22).

7. Stroller according to Claim 3 and 6, **characterized in that** at the end of the first cable pull (26) facing away from the control element (17), a sliding block (18), which abuts against the lever (13), is slidingly guided in the seat (4) under the sitting surface (6).

8. Stroller according to Claim 7, **characterized in that** the lever (13) is realized in a substantially T-shaped manner with two portions pointing transversely to the direction of travel (F) and the sliding block (18) abuts against one of the portions (13b, 13c) in dependence on the direction of installation of the seat (4).

9. Stroller according to Claim 1, **characterized in that** the locking element (20, 24) is a telescopic device which operates according to the wrapped spring principle.

10. Stroller according to Claim 1, **characterized in that** said stroller is a stroller for disabled children.

## Revendications

1. Poussette comprenant
a) un châssis (1) pliable,
b) un support de siège (10) fixé au châssis porteur pour supporter un siège (4) comprenant un dossier (9),
c) le siège (4) peut être fixé sur le support de siège (10) alternativement dans le sens de la marche (F) ou dans le sens opposé à la marche (F),
d) le support de siège (10)
d₁) est agencé sur le châssis (1) de manière orientable pour ajuster l'inclinaison du siège (4) par rapport à l'horizontale (H),
d₂) peut être bloqué dans chacune de ses positions par rapport au châssis (1),
e) l'orientation du support de siège (10) s'effectue avec la participation d'un dispositif d'orientation,
f) le dispositif d'orientation se compose d'un élément de manoeuvre (17), un élément de blocage (20, 24) et d'un activateur (13) qui est en liaison fonctionnelle avec l'élément de manoeuvre (17) et l'élément de blocage (20, 24),
g) l'élément de blocage (20, 24) est agencé sur le châssis (1),
h) l'activateur (13) est intégré dans le support de siège (10),
**caractérisée par** la caractéristique suivante :
i) l'élément de manoeuvre (17) est agencé sur le dossier (9).

2. Poussette selon la revendication 1, **caractérisée en ce que** l'activateur (13) est un levier (13) agencé de manière orientable sur le châssis porteur (1) contre la force d'un ressort (14).

3. Poussette selon la revendication 2, **caractérisée en ce que** le mouvement d'orientation du levier (13) peut être induit par l'intermédiaire de l'élément de manoeuvre (17).

4. Poussette selon la revendication 1, **caractérisée en ce que** l'élément de manoeuvre (17) est un bouton tournant.

5. Poussette selon la revendication 4, **caractérisée en ce que** le bouton tournant (17) est en liaison avec le levier (13) par un premier câble sous gaine (26).

6. Poussette selon la revendication 1 ou 2, **caractérisée en ce que** l'activateur (13) est en liaison avec l'élément de blocage (20, 24) par un deuxième câble sous gaine (22).

7. Poussette selon la revendication 3 ou 6, **caractérisée en ce qu'**un coulisseau (18), adjacent au levier (13), est guidé de manière glissante dans le siège (4) sous l'assise (6), à l'extrémité du premier câble sous gaine (26) opposée à l'élément de manoeuvre (17).

8. Poussette selon la revendication 7, **caractérisée en ce que** le levier (13) est sensiblement formé en T avec deux branches orientées transversalement par rapport au sens de la marche (F) et le coulisseau (18) est adjacent à l'une des branches (13b, 13c) en fonction du sens de l'installation du siège (4).

9. Poussette selon la revendication 1, **caractérisée en ce que** l'élément de blocage (20, 24) est un dispositif télescopique travaillant selon le principe du ressort enroulé.

10. Poussette selon la revendication 1, **caractérisée en ce qu'**elle est une poussette thérapeutique.
